**Europäisches Patentamt**

**European Patent Office**

**Office européen des brevets**

(19)

(11) Veröffentlichungsnummer: **0 009 813**

**A1**

(12) ## EUROPÄISCHE PATENTANMELDUNG

(21) Anmeldenummer: **79103791.4**

(22) Anmeldetag: **04.10.79**

(51) Int. Cl.³: **B 44 C 5/04**
**A 47 B 13/08**

(30) Priorität: **09.10.78 DE 2843971**

(43) Veröffentlichungstag der Anmeldung:
**16.04.80 Patentblatt 80/8**

(84) Benannte Vertragsstaaten:
**AT BE CH FR GB IT NL SE**

(71) Anmelder: **RESOPAL WERK H. Römmler GmbH**
**Kallstadter Strasse 1**
**D-6800 Mannheim 41(Käfertal)(DE)**

(72) Erfinder: **Riedl, Ernst**
**Blumenweg 15**
**D-6111 Heubach(DE)**

(74) Vertreter: Kempe, Wolfgang Dr. et al,
c/o Brown, Boveri & Cie AG Patentabteilung Postfach
351
D-6800 Mannheim 1(DE)

(54) **Mit einer Oberflächenstruktur versehene dekorative Schichtstoffplatte.**

(57) Die vorliegende Erfindung bezieht sich auf eine dekorative Schichtstoffplatte, insbesondere mit Fliesenstruktur, bei der Muster und Struktur übereinstimmen. Die Dekorschicht umfasst wenigstens eine Gewebe- oder Vliesbahn, insbesondere eine Dekorpapierbahn, die den Verbund zur Trägerschicht (1) herstellt. Die Dekorpapierbahn (2) weist eine erste Farbe auf, und ist mit Melaminharz imprägniert. Ferner weist die Dekorschicht eine mit einer zweiten Farbe eingefärbte Schicht eines thermoplastischen Stoffes (3) auf, wobei dieser im Bereich der Oberflächenvertiefungen im wesentlichen verdrängt ist und die darunterliegende zweite Farbe der Dekorpapierbahn (2) sichtbar werden läßt.

Fig. 1

RESOPAL WERK  
H. Römmler GmbH

Mannheim, den 5. 10. 78  
ZFE/Pl-Dr.Sc/Ht  
Mp.-Nr. 648/78

"Mit einer Oberflächenstruktur versehene dekorative Schichtstoffplatte"

Die Erfindung bezieht sich auf eine mit einer Oberflächenstruktur versehene dekorative Schichtstoffplatte, deren Dekorschicht mit einer beim Verpressen verdichtbaren Trägerschicht verbunden ist, die aus mehreren Lagen von mit wärmehärtbaren Harzen getränkten Gewebe- oder Vliesbahnen, insbesondere Papierbahnen, oder einer dünnen Holzwerkstoffplatte, insbesondere einer Spanplatte, besteht.

Derartige dekorative Schichtstoffplatten sind aus der DT-OS 2 630 613 und 2 650 560 bekanntgeworden, wobei dort insbesondere Oberflächenstruktur und Farbmuster übereinstimmen.

Im Falle der bekannten Schichtstoffplatten handelt es sich um dekorative Schichtpreßstoffplatten im engeren Sinne, d. h. die übereinander laminierten Bahnen bestehen grundsätzlich aus mit wärmehärtbaren Harzen getränkten Papieren und dergleichen. Damit weisen diese Platten die bekannten Vorteile auf, wie kratzfeste Oberfläche und Unempfindlichkeit gegenüber heißen Gegenständen z. B. heißen Kochtöpfen und dergleichen. Solche Platten finden insbesondere im Küchenbereich für Arbeitsplatten große Wertschätzung.

Auf der anderen Seite ist das Verfahren zur Herstellung dieser speziellen Schichtstoffplatten recht aufwendig und durch die Verwendung von nur mit duroplastischen Harzen getränkten Schichten in Bezug auf Farbnuancierung und vor allem in Bezug auf die technologisch zulässigen Bedingungen, insbesondere Preßbedingungen stark eingeschränkt.

Der vorliegenden Erfindung lag daher die Aufgabe zugrunde, eine dekorative Schichtstoffplatte, die ebenfalls eine Übereinstimmung von Oberflächenstruktur und Farbmuster aufweisen kann, zur Verfügung zu stellen, die sich in größerer Variabilitätund mit geringerem technologischen Aufwand herstellen läßt. Dabei sollte die Oberflächenkratzfestigkeit erhalten bleiben.

Die vorgenannte Aufgabe ist im Falle einer Schichtstoffplatte der eingangs genannten Art gemäß der Erfindung dadurch gelöst, daß die Dekorschicht mindestens eine den Verbund zur Trägerschicht herstellende eine erste Farbe aufweisende Gewebe- oder Vliesbahn, insbesondere Dekorpapierbahn, enthält und mindestens eine mit einer zweiten Farbe eingefärbte Schicht eines thermoplastischen Stoffes, wobei dieser im Bereich der Oberflächenvertiefungen im wesentlichen verdrängt ist und die darunterliegende zweite Farbe der Dekorbahn sichtbar werden läßt.

Bevorzugte Ausführungsformen der Erfindung sind in den Unteransprüchen gekennzeichnet.

Unter einer verdichtbaren Trägerschicht wird hier in der Regel eine solche Schicht verstanden, die mindestens im Verhältnis 100 : 80 bei üblichen Betriebspreßdrücken von 2 bis 10 N/mm$^2$ zusammendrückbar ist.

Bei der Trägerschicht kann es sich entweder um eine aus mehreren mit wärmehärtbaren Harzen getränkten Gewebe- oder Vliesbahnen, vorzugsweise auf Zellulosebasis handeln, wobei insbesondere Kraftpapier zu nennen ist. In diesem Falle empfiehlt sich als wärmehärtbares Harz in bekannter Weise Phenolharz.

Eine weitere Möglichkeit zur Realisierung der verdichtbaren Trägerschicht besteht in einer dünnen, vorzugsweise 2 bis 5 mm starken Holzwerkstoffplatte z. B. Spanplatte, die vor der endgültigen Verpressung mit der Dekorschicht nicht endgültig ausgehärtete Harzanteile enthält, wie dies in der DT-OS 25 50 769 näher beschrieben ist.

Die Dekorschicht kann aus zwei oder mehr Bahnen bestehen. Mindestens eine Gewebe- oder Vliesbahn, vorzugsweise auf Zellulosebasis, befindet sich auf der Trägerschicht. Sie ist normalerweise eingefärbt und gegebenenfalls bedruckt und zwar in der Farbe bzw. mit dem Muster, das im Bereich der Oberflächenstruktur-Vertiefungen beim Enderzeugnis zum Vorschein kommen soll. Es ist selbstverständlich möglich, hier auch zwei Bahnen zu verwenden. Über der so beschriebenen Dekorbahn befindet sich mindestens eine Schicht eines thermoplastischen Stoffes.

Bei dem gemäß der Erfindung zu verwendenden thermoplastischen Stoff kann es sich insbesondere um Stoffe auf Basis von Polyacrylat oder Polyacetal handeln. Es sind jedoch auch andere thermoplastische Stoffe denkbar, insbesondere solche mit guter Hitzebeständigkeit.

In der Regel ist diese Schicht beim Aufbringen etwa 0,07 bis 0,08 mm stark, beim fertiggestellten Produkt ist die Schicht im Bereich der Oberflächenvertiefungen nur noch etwa 0,01 bis 0,025 mm und im übrigen Bereich etwa 0,075 bis 0,10 mm stark.

Die Aufbringung der thermoplastischen Schicht kann auf verschiedene Weise erfolgen, nämlich durch Einlegen einer entsprechend dicken und eingefärbten Thermoplastfolie oder durch Aufbringen einer eingefärbten Thermoplast-Dispersion auf das Dekorpapier mit anschließender Trocknung.

Bei der Wahl der Farben ist geschmacklich eine weite Varianz denkbar. Besonders geeignet ist das erfindungsgemäße Erzeugnis als Stein- und Fliesendekor. Hierbei können die Fugen entweder hell ausgebildet sein, so daß eine Dekorbahn von entsprechender Farbe, insbesondere weiß zu wählen wäre oder die Fugen werden dunkel ausgebildet, womit die Dekorbahn dunkelbraun oder schwarz eingefärbt sein kann. Die Farbe der thermoplastischen Schicht soll in der Regel als Kontrastfarbe gewählt werden, wobei durch die Fließeigenschaft der thermoplastischen Schicht in Verbindung mit Dichteunterschieden der Vliesbahnen auch melierte bzw. genarbte Farbmuster im Bereich der Oberflächenerhöhungen herstellbar sind. Auf diese Weise ist es z. B. möglich, ein Dekor zu erzeugen, das bordeauxrote genarbte Fliesen in provenzalischer Form zeigt, kombiniert mit einer hellen oder z. B. auch einer dunklen Fuge.

Im allgemeinen empfiehlt es sich, oberhalb der thermoplastischen Schicht zur Verbesserung der Hitzebeständigkeit des Enderzeugnisses mindestens eine weitere Schicht aufzubringen, bevorzugt eine mit einem wärmehärtbaren Harz getränkte zellulosehaltige Bahn bzw. Gewebe oder Vlies, die bei den Aushärtbedingungen transparent wird. Es kann sich auch um mehrere solche Schichten handeln, doch ist dies nur in Sonderfällen erforderlich. Für die Verwendung solcher Schichtstoffplatten an senkrechten Wandflächen, etwa auch im Küchenbereich, ist die Abdeckung des Thermoplasten mit einer solchen Schicht nicht unbedingt notwendig.

Im folgenden soll die Erfindung anhand eines Ausführungsbeispieles näher erläutert werden.

In der zugehörigen Zeichnung zeigt
Figur 1 den Schichtenaufbau vor der endgültigen Verpressung
Figur 2 den Schichtenaufbau beim Enderzeugnis einschl.
     Preßblech.

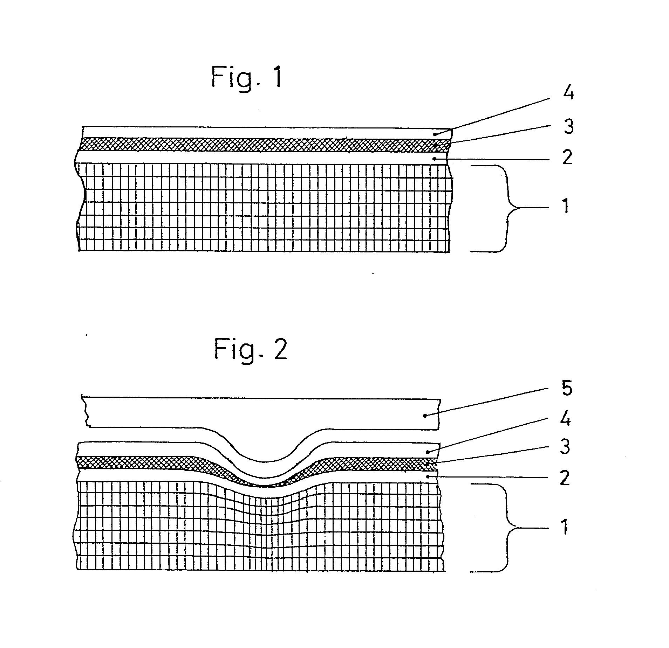

Gemäß Fig. 1 ist auf mehrere Lagen mit Phenolharz imprägniertem Kernpapier 1 ein mit Melaminharz imprägniertes farbiges Dekorpapier 2 und darauf eine Polyacrylfolie 3 aufgelegt. Zum Schutze der relativ weichen Polyacrylfolie 3 kann zusätzlich oberhalb die Auflage einer mit Melaminharz getränkten Papierbahn 4, die bei Aushärtung transparent wird, vorgesehen werden.

In Fig. 2 ist bei gleichem Schichtaufbau wie in Fig. 1 zusätzlich ein mit 5 bezeichnetes strukturiertes Preßblech zu sehen.

Bei Verpressung dieses Stapels unter Temperatureinwirkung erfolgt gleichzeitige Aushärtung und Strukturierung des Laminates und ein Verdrängen der unter Temperatureinwirkung fließfähig gewordenen Thermoplastfolie aus Zonen höherer Verdichtung (z. B. Fugen) in Richtung von Zonen geringerer Verdichtung. Somit wird die Dekorschicht 2, die im Farbkontrast zur Thermoplastfolie 3 steht (z. B. weiße Fuge gegenüber roter Fliesenfläche) sichtbar und eine Übereinstimmung von Oberflächenstruktur und Farbmuster erreicht.

Zu dem anhand der Figuren erläuterten Ausführungsbeispiel werden im folgenden noch 3 Verfahrensbeispiele zur Herstellung der erfindungsgemäßen dekorativen Preßschichtstoffplatte beschrieben.

Beispiel 1:

Es werden sieben Bogen phenolharzimprägniertes Natronkraftpapier, mit einem Harzgehalt von 50 % bezogen auf das Rohpapiergewicht von 150 g/m$^2$ als Kernlage 1 und darauf entsprechend Fig. 1 ein 80 g/m$^2$ schweres Dekorpapier 2, welches in der Masse bei der Herstellung pigmentiert, weiß eingefärbt und bezogen auf das Rohpapiergewicht mit 100 % ungefärbtem Melaminharz imprägniert ist, zusammengelegt. Darauf wird eine 0,075 mm dicke Polyacrylfolie 3, die mit gelben lichtechten Pigmenten eingefärbt ist, aufgelegt. Den Abschluß bildet ein 40 g/m$^2$ schweres Overlaypapier aus gebleichter Natronzellulose, imprägniert mit 80 g/m$^2$ ungefärbtem Melaminharz. Die Papiere sind nach dem Imprägnieren getrocknet worden auf 7 bis 10 % flüchtige Bestandteile in der Kernlage 1, 5 bis 8 % in der Dekorlage 2 und mit 7 bis 9 % im Overlay 4.

Dieses Paket wird nun in hydraulischen Etagenpressen zwischen Heizplatten und Preßblech bei einem Druck von 10 N/mm$^2$ und einer Temperatur von 150 $^o$C im Preßgut mit anschließender Rückkühlung auf 50 $^o$C zu einem Verbundkörper verpreßt. Die verwendeten Preßbleche weisen Strukturen in Form von Kachelfugen auf. Hierbei sind die Fugen auf den Preßblechen 5 erhaben, so daß im Preßgut eine Vertiefung ausgebildet wird.

Durch den Einfluß der Temperatur und des Druckes wird die flächige Thermoplastfolie 3 plastisch verdrängt, so daß die Farbe der darunterliegenden Dekorbahn 2 sichtbar wird. Gleichzeitig schmilzt und fließt das Melamin- und Phenolharz und härtet schließlich aus. Das hochharzhaltige Overlay 4 wird dabei transparent. Die nach der Rückkühlung aus der Presse entnommenen Verbundplatten haben übereinstimmende Farb- und Prägemuster, wobei besonders scharfe und gleichmäßige Farbabgrenzungen zwischen Fuge und Fläche durch die Fließfähigkeit der Thermoplastfolie erreicht werden, ohne daß größere Schwankungen im Gehalt an flüchtigen Bestandteilen der Kern-, Dekor- und Overlaypapiere, die in der Fabrikation schwer vermeidbar sind, das Ergebnis beeinflussen.

Beispiel 2:

In Abänderung von Beispiel 1 wird als Kernlage 1 eine 3 mm dicke Spanplatte eingesetzt und im Paketaufbau ohne Overlay 4 gearbeitet. Gleichzeitig wird anstelle des strukturierten Preßblechs 5 eine Strukturmatrize verwendet. In diesem Falle erfolgt zum Schutze der 0,075 mm dicken eingefärbten Polyacrylfolie 3 die Zulage einer handelsüblichen 0,3 mm dicken Alu-Folie, die auch als Trennfolie wirkt, keinen Verbund eingeht und nach der Herstellung des Verbundkörpers wieder entfernt wird. Dieser Aufbau eignet sich wegen der hohen Kompressibilität der Spanplatte besonders zur Ausbildung tiefer Strukturen, wie z. B. der Nachbildung von Schieferoberflächen.

Beispiel 3:

In Abänderung von Beispiel 1 wird anstelle der 0,075 mm dicken Polyacrylfolie 3 und der Dekorbahn 2 im Aufbau nach Fig. 3 eine Dekorpapierbahn verwendet, die auf folgende Art vorbehandelt wurde:

Das Dekorpapier mit einem Flächengewicht von 100 g/m$^2$, bei der Herstellung in der Masse pigmentiert und grün eingefärbt, wird mit einem nicht eingefärbten Melaminharz imprägniert und getrocknet, wobei 100 g/m$^2$ Melaminharz im Papier verbleiben.

Die flüchtigen Bestandteile nach dem Trocknen betragen 8 %. Danach wird auf das imprägnierte Dekorpapier in bekannter Weise, z. B. mit Rollrakel, ein Deckstrich aus einer dunkeleingefärbten Acrylharzdispersion aufgebracht und getrocknet. Nach dem Trocknen beträgt das Gewicht des Deckstrichs 70 g/$m^2$, die flüchtigen Bestandteile betragen 9 %. Die so erzeugte Dekorschicht tritt anstelle der in Fig. 1 bzw. 2 mit 2 und 3 bezeichneten Schichten. Die Overlayschicht 4 wird verwendet. Im übrigen wird wie in Beispiel 1 verfahren und ein übereinstimmendes Farb- und Prägemuster erhalten.

<u>A n s p r ü c h e</u>

1. Mit einer Oberflächenstruktur versehene dekorative Schichtstoffplatte, deren Dekorschicht mit einer beim Verpressen verdichtbaren Trägerschicht (1) verbunden ist, die aus mehreren Lagen von mit wärmehärtbaren Harzen getränkten Gewebe- oder Vliesbahnen, insbesondere Papierbahnen, oder einer dünnen Holzwerkstoffplatte, insbesondere einer Spanplatte, besteht, <u>dadurch gekennzeichnet,</u> daß die Dekorschicht mindestens eine den Verbund zur Trägerschicht (1) herstellende, eine erste Farbe aufweisende Gewebe- oder Vliesbahn, insbesondere Dekorpapierbahn (2), enthält und mindestens eine mit einer zweiten Farbe eingefärbte Schicht eines thermoplastischen Stoffes (3), wobei dieser im Bereich der Oberflächenvertiefungen im wesentlichen verdrängt ist und die darunterliegende zweite Farbe der Dekorbahn (2) sichtbar werden läßt.

2. Schichtstoffplatte nach Anspruch 1, dadurch gekennzeichnet, daß die Dekorschicht aus drei Schichten besteht, wobei die thermoplastische Schicht (3) von einer die Oberfläche bildenden transparenten mit wärmehärtbarem Harz getränkten zellulosehaltigen Bahn (4) abgedeckt ist.

3. Schichtstoffplatte nach Anspruch 1 oder 2, dadurch gekennzeichnet, daß die Schicht eines thermoplastischen Stoffes (3) im wesentlichen aus Polyacrylat oder Polyacetal besteht.

4. Schichtstoffplatte nach einem der Ansprüche 1 bis 3, dadurch gekennzeichnet, daß der thermoplastische Stoff (3) vernetzt ist.

Fig. 1

4
3
2
1

Fig. 2

5
4
3
2
1

| Kategorie | Kennzeichnung des Dokuments mit Angabe, soweit erforderlich, der maßgeblichen Teile | betrifft Anspruch |
|---|---|---|
| D | <u>DE - A - 2 650 560</u> (EXXON)<br><br>* Seite 12, Zeilen 31-39; Seite 13; Figur 2 *<br><br>-- | 1,2 |
|  | <u>US - A - 3 968 288</u> (R.F. TREXLER)<br><br>* Spalte 2, Zeilen 11-68; Spalte 3; Spalte 4, Zeilen 1-12; Figur 2 *<br><br>-- | 1 |
|  | <u>US - A - 3 666 604</u> (D. COFFET)<br><br>* Spalte 2, Zeilen 36-72; Spalte 3, Zeilen 1-54; Figur 3 *<br><br>-- | 2,3 |
| A | <u>FR - A - 2 293 312</u> (EXXON) |  |
| A | <u>FR - E - 2 030 513</u> (NISHIZAWA SHOJI)<br><br>---- |  |

**KLASSIFIKATION DER ANMELDUNG (Int.Cl. 3)**

B 44 C  5/04
A 47 B 13/08

**RECHERCHIERTE SACHGEBIETE (Int. Cl. 3)**

B 44 C  5/04
        3/08
        1/24
A 47 B 13/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-01-1980 | VAN THIELEN |

EPA form 1503.1  06.78